# EUROPÄISCHE PATENTANMELDUNG

(11) **EP 1 695 816 A2**
(43) Veröffentlichungstag der Anmeldung: **30.08.2006**
(21) Anmeldenummer: 05026725.1
(22) Anmeldetag: 07.12.2005
(51) Int. Cl.: B30B 1/26, B30B 1/24, B23Q 5/34

(54) **Antriebsvorrichtung, insbesondere für Press- und/oder Biegemaschinen**

(30) Priorität: 25.02.2005 DE 202005003089 U
(71) Anmelder: Wagner Federn GmbH, 70839 Gerlingen (DE)
(72) Erfinder: Wagner, Günther, 70839 Gerlingen (DE)
(74) Vertreter: Schurack, Eduard F.

(57) **Zusammenfassung**

Die vorliegende Erfindung betrifft eine Antriebsvorrichtung, insbesondere für Press- und/oder Biegemaschinen, mit einem angetriebenen Steuerelement (2), durch dessen Oberflächenformgestaltung eine Steuerkurve vorgebbar ist, dadurch gekennzeichnet, dass das Steuerelement (2) an einem Abnehmerelement (3) derart anliegt, dass das Abnehmerelement (3) durch die Steuerkurve derart bewegbar ist, dass eine Kraftübertragung auf einen mit dem Abnehmerelement (3) mechanisch gekoppelten Schlitten (9) zum Bewegen des Schlittens (9) querkraftfrei erfolgt.

## Beschreibung

Die vorliegende Erfindung betrifft eine Antriebsvorrichtung, welche insbesondere in Press- und/oder Biegemaschinen angeordnet sein kann.

Bei bekannten Antriebsvorrichtungen für Pressmaschinen oder Biegemaschinen ist eine Kraftübertragung der Antriebsvorrichtung zum Pressen oder Biegen mittels einem dazu vorgesehenen Element, bspw. einem Schlitten, sehr komplex und führt oftmals dazu, dass nur eine relativ unzureichende Kraftübertragung durchgeführt werden kann. Oftmals führt eine Kraftübertragung durch bekannte Antriebsvorrichtungen auch dazu, dass die Antriebsvorrichtung selbst oder zumindest Teilelemente davon relativ schnell verschlissen oder beschädigt werden, da das der Antriebsvorrichtung zugrundeliegende Kraftübertragungsprinzip eine Krafteinwirkung auf andere Teile der Antriebsvorrichtung bzw. der Pressmaschine oder der Biegemaschine hervorruft, welche dort nicht erwünscht sind und zu entsprechenden Nachteilen im Hinblick auf Verschleiß und optimale Einsatzmöglichkeit der Antriebsvorrichtung bzw. einer Pressmaschine oder Biegemaschine, in der eine entsprechende Antriebsvorrichtung zugrundegelegt ist, führt.

Daher ist es Aufgabe der Erfindung, eine Antriebsvorrichtung zu schaffen, welche eine optimale Kraftübertragung ermöglicht. Darüber hinaus ist es Aufgabe der Erfindung, eine Antriebsvorrichtung zu schaffen, welche möglichst einfach aufgebaut und aufwändsarm und kompakt realisiert werden kann. Die Antriebsvorrichtung soll darüber hinaus in vielfältiger Weise eingesetzt werden können.

Diese Aufgabe wird durch eine Antriebsvorrichtung, welche die Merkmale des Patentanspruchs 1 aufweist, gelöst.

Eine erfindungsgemäße Antriebsvorrichtung umfasst ein angetriebenes Steuerelement, durch dessen Formgestaltung eine Steuerkurve vorgebbar ist. Die erfindungsgemäße Antriebsvorrichtung ist insbesondere zum Einsatz in Press- und/oder Biegemaschinen ausgebildet. Das Steuerelement der Antriebsvorrichtung ist an einem Abnehmerelement anliegend angeordnet. Das mechanische Wirkprinzip zwischen dem Steuerelement und dem anliegenden Abnehmerelement ist dabei derart ausgebildet, dass das Abnehmerelement durch die Steuerkurve derart bewegbar ist, dass eine Kraftübertragung auf einen mit dem Abnehmerelement mechanisch gekoppelten Schlitten zum Bewegen des Schlittens querkraftfrei erfolgt. Dadurch kann eine Antriebsvorrichtung geschaffen werden, welche eine optimale Kraftübertragung auf einen Schlitten ermöglicht. Dies ermöglicht eine optimale Bewegung des Schlittens im Hinblick auf dessen Einsatzmöglichkeiten in einer Press- und/oder Biegemaschine, wodurch eine optimale Kraftausnutzung erfolgen kann. Darüber hinaus ist die erfindungsgemäße Antriebsvorrichtung aufwandsarm und relativ einfach realisierbar, wodurch auch eine relativ kostengünstige Herstellung gewährleistet werden kann. Ferner kann die erfindungsgemäße Antriebsvorrichtung sehr kompakt ausgebildet werden und gewährleistet eine vielfältige Einsetzbarkeit. Bei der erfindungsgemäßen Antriebsvorrichtung werden die auftretenden Kräfte in ihrer Wirkebene abgeleitet, wodurch die Querkraftfreiheit gegeben ist. Kraftmomente treten nicht auf. Darüber hinaus treten auch keine Kurvenverzerrungen auf.

Als vorteilhafte Ausgestaltung kann vorgesehen sein, dass das Abnehmerelement durch die Steuerkurve entlang einer ersten Zahnstange bewegbar ist, wobei die Bewegung des Abnehmerelements durch zumindest ein Zahnrad geführt ist, wobei das Zahnrad in die erste Zahnstange eingreift und mit dem Abnehmerelement mechanisch verbunden ist. Diesbezüglich kann eine optimale Führung des Abnehmerelements im Hinblick auf eine optimale Kraftübertragung, welche querkraftfrei erfolgt, gewährleistet werden.

Bevorzugt ist das Abnehmerelement im Winkel von 45° zur Bewegung des Schlittens geführt, wobei insbesondere die erste Zahnstange im Winkel von 45° zur Bewegungsrichtung des Schlittens angeordnet ist. Eine derartige Anordnung des Abnehmerelements bzw. der Bewegungsrichtung des Abnehmerelements gewährleistet, dass die übertragenen Kräfte in ihrer Wirkebene abgeleitet werden können und eine optimale Kraftübertragung auf den Schlitten erfolgt.

Eine Abtriebszahnstange ist in vorteilhafter Weise im Winkel von 90° zur Bewegungsrichtung des Abnehmerelements ausgebildet. Insbesondere ist die Abtriebszahnstange im Winkel von 90° zur ersten Zahnstange angeordnet und mit dem Schlitten mechanisch verbunden. Diesbezüglich kann eine optimale Führung sowohl des Abnehmerelements als auch des Schlittens erreicht werden und im besonderen Maße die erforderliche Kraftübertragung zum Bewegen des Schlittens gewährleistet werden. Auftretende Querkräfte können dadurch verhindert werden und die Bewegung des Schlittens optimal geführt bzw. durchgeführt werden.

In vorteilhafter Weise ist ein zweites Zahnrad mit dem ersten Zahnrad mechanisch verbunden, wobei das zweite Zahnrad in die Abtriebszahnstange eingreift und die Abtriebszahnstange mit dem Schlitten verbunden ist. Dadurch kann eine mechanische Kopplung zwischen dem Steuerelement und dem Schlitten erreicht werden, welche aufwandsarm ausgebildet ist und die Querkraftfreiheit der Kraftübertragung zuverlässig gewährleistet.

Darüber hinaus ist in bevorzugter Weise die querkraftfreie Kraftübertragung abhängig von einem variabel einstellbaren Winkel zwischen der ersten Zahnstange und der Abtriebszahnstange, und einem variabel einstellbaren Verhältnis der Durchmesser des ersten Zahnrades und des zweiten Zahnrades. In flexibler Weise kann dadurch eine mechanische Kopplung erreicht werden, welche eine vielfältige Ausgestaltung der einzelnen Teilelemente und deren Anordnung zueinander ermöglicht, um die querkraftfreie Kraftübertragung durchführen zu können. Größenverhältnisse und/oder Neigungen der Teilelemente zueinander ermöglichen einen vielfältigen Aufbau, wodurch die gesamte Antriebsvorrichtung in vielfältiger Weise konzipiert und ausgebildet werden kann. Das ermöglicht einen situationsabhängigen optimierten Aufbau der Antriebvorrichtung nicht zuletzt im Hinblick auf Anforderungen an die Antriebsvorrichtung sondern auch im Hinblick auf Platzbedarf und Kosten.

Es kann dabei vorgesehen sein, dass der Durchmesser des ersten Zahnrades größer ist als der Durchmesser des zweiten Zahnrades. Es kann jedoch auch eine umgekehrte Ausgestaltung dieser Größenverhältnisse vorgesehen sein. Es kann eine Mehrzahl an ersten Zahnrädern und/oder eine Mehrzahl an zweiten Zahnrädern ausgebildet sein. Der Flexibilitätsgrad der individuellen Ausgestaltung der Antriebsvorrichtung kann dadurch nochmals erhöht werden. Der Winkel zwischen der ersten Zahnstange und der Abtriebszahnstange kann dabei in einem großen Intervall variieren. Es können Winkel kleiner oder gleich 150°, insbesondere kleiner oder gleich 90° ausgebildet werden. Dies ermöglicht eine individuelle und situationsabhängige Ausgestaltung einer Bewegungskopplung bzw. einer Bewegungsübertragung von dem Steuerelement zum Schlitten.

Es kann weiterhin vorgesehen sein, dass zumindest ein Stützzahnrad angeordnet ist, welches zur Abstützung des ersten Zahnrads ausgebildet ist und in das erste Zahnrad und eine zweite Zahnstange eingreift, insbesondere in eine parallel zur ersten Zahnstange angeordnete zweite Zahnstange eingreift. Dadurch kann ermöglicht werden, dass das Abnehmerelement bzw. das zumindest erste Zahnrad sicher in seiner Position bzw. seiner Bewegung entlang der ersten Zahnstange gehalten bzw. geführt werden kann.

Das Steuerelement kann zur Vorgabe einer Steuerkurve in einer Querschnittansicht eine kreisförmige Form mit zumindest einer nockenartigen Ausbuchtung ausgebildet sein. Des Weiteren kann vorgesehen sein, dass durch die durch die querkraftfreie Kraftübertragung hervorgerufene Hub-Bewegung des Schlittens ein Umformen und/oder Schneiden von Gegenständen, insbesondere einer Press- und/oder Biegemaschine bewirkbar ist.

Es kann vorgesehen sein, dass eine Übersetzung abhängig von dem Verhältnis der Durchmesser zwischen dem ersten Zahnrad und dem zweiten Zahnrad variabel einstellbar ist. Unter einer Übersetzung wird dabei ganz allgemein ein Verhältnis zwischen einer Nockenhöhe N des Steuerelements zu einem erzeugbaren Hub des Schlittens verstanden. Die Übersetzung kann anstatt oder zusätzlich auch abhängig von der Anordnung der Zahnstangen zueinander sein.

Es kann vorgesehen sein, dass die Übersetzung einen Wert kleiner 4, insbesondere einen Wert kleiner oder gleich 2 aufweist. Bevorzugt ist der Wert der Übersetzung zwischen 1,0 und 2,0. Diese Angaben sind jedoch nicht einschränkend zu verstehen, sondern lediglich als vorteilhafte Ausgestaltungen anzusehen. Eine Übersetzung kann durch die Position des Abnehmerelements gewählt werden. Die Übersetzung kann dabei einen Wert von etwa 1,41, welches Wurzel 2 entspricht, aufweisen. Dies bedeutet, dass bei einer Bewegung des Abnehmerelements entlang der ersten Zahnstange um eine Längeneinheit, der Schlitten um 1,41 Längeneinheiten bewegt wird. Es kann auch vorgesehen sein, dass dies umgekehrt ausgebildet ist und bei einer Bewegung des Schlittens um eine Längeneinheit das Abnehmerelement bzw. die Abnehmerrolle um 1,41 Längeneinheiten bewegbar ist.

Die erfindungsgemäße Antriebsvorrichtung kann generell beim Antrieb mit Kurvenscheiben und/oder Exzentern und/oder Steuerleisten verwendet werden. Besonders vorteilhaft erweist sich die Antriebsvorrichtung bei Biegeschlitten in Bandbiegeautomaten, wobei diesbezüglich mehrere Schlitten und mehrere erfindungsgemäße Antriebsvorrichtungen über- oder nebeneinander in einer entsprechenden Bandbiegemaschine angeordnet sein können. Auch in Pressmaschinen kann die erfindungsgemäße Antriebsvorrichtung in bevorzugter Weise angeordnet sein.

Ein Ausführungsbeispiel der erfindungsgemäßen Antriebsvorrichtung wird anhand schematischer Zeichnungen näher erläutert. Es zeigen:
- Figur 1: eine Querschnittsdarstellung der erfindungsgemäßen Antriebsvorrichtung;
- Figur 2: eine Querschnittsdarstellung der Anordnung eines Abnehmerelements und der zur Führung des Abnehmerelements vorgesehenen Zahnräder;
- Figur 3: eine Querschnittsdarstellung von mehreren nebeneinander angeordneten erfindungsgemäßen Antriebsvorrichtungen;

- Figur 4: eine Querschnittdarstellung einer zweiten Ausführung der Antriebsvorrichtung;
- Figur 5: eine Querschnittdarstellung der Anordnung eines Abnehmerelements und der zur Führung des Abnehmerelements vorgesehenen Zahnräder gemäß der Ausführung in Figur 4; und
- Figur 6: eine Querschnittdarstellung eines Teilbereichs gemäß Figur 4.

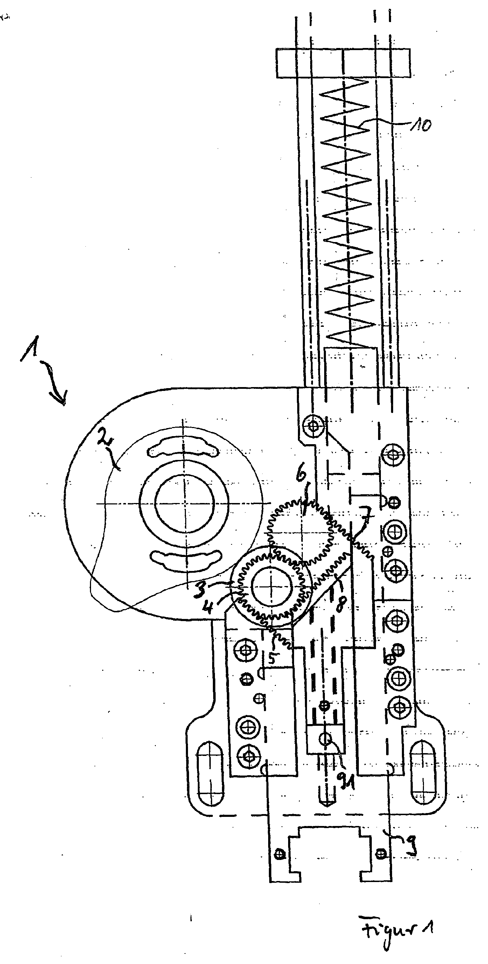

In Figur 1 ist eine erfindungsgemäße Antriebsvorrichtung 1 gezeigt, welche in einer Press- und/oder Biegemaschine angeordnet ist und zum Antrieb eines Schlittens 9 ausgebildet ist, wobei der Schlitten 9 zum Pressen und/oder Biegen von Gegenständen, beispielsweise Blechteilen, ausgebildet ist. Die erfindungsgemäße Antriebsvorrichtung 1 umfasst ein Steuerelement 2, welches mittels einem nicht dargestellten Antrieb angetrieben werden kann, und um eine senkrecht zur Betrachtungsebene orientierte Achse rotieren kann. Wie aus Figur 1 zu erkennen ist, weist das Steuerelement 2 in der Querschnittdarstellung eine kreisförmige Formgestaltung auf, welche an einem Bereich eine nockenförmige Ausbuchtung nach außen hin aufweist. Durch die dargestellte Formgestaltung des Steuerelements 2 wird eine Steuerkurve vorgegeben, wenn das Steuerelement 2 um die entsprechende Achse rotiert. Darüber hinaus umfasst die Antriebsvorrichtung 1 ein Abnehmerelement 3, welches im Ausführungsbeispiel als Abnehmerrolle ausgebildet ist, und im Querschnitt gemäß Figur 1 eine kreisringförmige Ausgestaltung aufweist. Wie in Figur 1 zu erkennen ist, liegt das Abnehmerelement 3 mit seiner Oberfläche an der Oberfläche des Steuerelements 2 an.

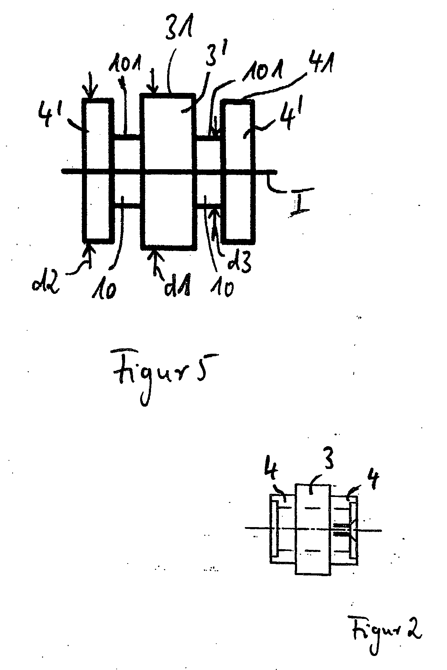

Des Weiteren umfasst die Antriebsvorrichtung 1 ein erstes Zahnrad 4, welches benachbart zum Abnehmerelement 3 angeordnet ist, und mit diesem mechanisch fest, beispielsweise durch eine Stange, an dem das Abnehmerelement 3 und das erste Zahnrad 4 befestigt sind, verbunden ist. Die Antriebsvorrichtung 1 umfasst ein weiteres erstes Zahnrad 4, welches in der Darstellung gemäß Figur 1 nicht gezeigt ist, und auf der gegenüberliegenden Seite des Abnehmerelements 3 derart angeordnet ist, dass das Abnehmerelement 3 zwischen diesen beiden ersten Zahnrädern 4 an der gemeinsamen Stange befestigt ist. Diesbezüglich ist aus der Figur 2 die Anordnung des Abnehmerelements 3 und der beiden benachbarten ersten Zahnräder 4 gezeigt.

Wie aus Figur 1 zu erkennen ist, weist das Abnehmerelement 3 einen größeren Radius wie die beiden ersten Zahnräder 4 auf. Es kann jedoch auch vorgesehen sein, dass die ersten Zahnräder 4 einen größeren Radius als das Abnehmerelement 3 aufweisen. Diesbezüglich ist eine entsprechende Vorbeiführung des Steuerelements 2 an den beiden ersten Zahnrädern 4 zu berücksichtigen.

Wie in Figur 1 dargestellt, umfasst die Antriebsvorrichtung 1 eine erste Zahnstange 5, welche im Winkel von 45° gegenüber der Horizontalen geneigt ist. In diese erste Zahnstange 5 greift das in Figur 1 dargestellte erste Zahnrad 4 ein. In entsprechender Weise greift das gegenüberliegende erste Zahnrad 4 in eine an einer entsprechenden Position und in einer entsprechenden Neigung ausgebildete erste Zahnstange 5 ein. Dies bedeutet, dass zwei parallel zueinander angeordnete erste Zahnstangen 5 in der Antriebsvorrichtung 1 angeordnet sind, welche im Winkel von 45° gegenüber der Waagrechten geneigt sind und in die jeweils eines der beiden ersten Zahnräder 4 eingreifen.

Die Antriebsvorrichtung 1 weist darüber hinaus ein Stützzahnrad 6 auf, welches in das erste Zahnrad 4 und eine zweite Zahnstange 7 eingreift. In entsprechender Weise kann ein weiteres Stützzahnrad 6 vorgesehen sein, welches in analoger Weise in das weitere erste Zahnrad 4 (gegenüberliegenden Seite des Abnehmerelements 3) und in eine weitere zweite Zahnstange 7 eingreift, welche benachbart zu der dargestellten Zahnstange 7 angeordnet ist. Die zweite Zahnstange 7 bzw. gegebenenfalls die beiden zweiten Zahnstangen 7 sind ebenfalls in einem Winkel von 45° gegenüber der horizontalen angeordnet und somit parallel zur ersten Zahnstange 5 bzw. zu den ersten Zahnstangen 5 ausgebildet.

Wie aus Figur 1 zu entnehmen ist, ist des Weiteren eine Abtriebszahnstange 8 angeordnet, welche mechanisch fest mit dem Schlitten 9 verbunden ist. Die Abtriebszahnstange 8 ist in einem Winkel von 90° zur ersten Zahnstange 5 sowie zur zweiten Zahnstange 7 orientiert. Des Weiteren weist der Schlitten 9 eine Schlittenverstellung 91 auf. Wie in Figur 1 des Weiteren gezeigt, ist eine Rückholfeder 10 ausgebildet, welche den nach unten bewegten Schlitten 9 wieder in Richtung der Antriebsvorrichtung 1 zurückführt.

Nachfolgend wird die Funktionsweise der erfindungsgemäßen Antriebsvorrichtung 1 näher erläutert. Indem das Steuerelement 2 in der Betrachtungsebene rotiert, erfolgt beim Überstreichen des nockenförmigen Bereichs bzw. der Ausbuchtung der Oberfläche des Steuerelements 2 an der Oberfläche des Abnehmerelements 3 ein Bewegen des Abnehmerelements 3 entlang der 45° geneigten ersten Zahnstange 5. Die Bewegung des Abnehmerelements 3 wird dabei durch die in die erste Zahnstange 5 eingreifenden ersten Zahnräder 4 geführt. Zur sicheren Führung greift diesbezüglich das Stützzahnrad 6 in das erste Zahnrad 4 und in die zweite Zahnstange 7 ein, wodurch ein Verschieben oder Herausspringen des ersten Zahnrades 4 aus der ersten Zahnstange 5 verhindert werden kann. Das Stützzahnrad 6 bewegt sich dabei entlang der zweiten Zahnstange 7.

Wie aus Figur 1 zu erkennen ist, wird durch eine Bewegung des ersten Zahnrads 4 entlang der geneigten ersten Zahnstange 5 ein Bewegen des Schlittens 9 in vertikaler Richtung nach unten derart bewirkt, indem das erste Zahnrad 4 in die Abtriebszahnstange 8 eingreift und durch das Bewegen bzw. Drehen des ersten Zahnrades 4 auch eine Bewegung des ersten Zahnrades 4 entlang der Abtriebszahnstange 8 erfolgt. Aufgrund dieser Bewegung und dem Abstützen des ersten Zahnrades 4 an der ersten Zahnstange 5 mittels dem Stützzahnrad 6 wird der Schlitten 9 in vertikaler Richtung nach unten bewegt. Die erste Zahnstange 5 und die Abtriebszahnstange 8 sind in einer Betrachtungsebene senkrecht zur in Figur 1 dargestellten Querschnittdarstellung versetzt zueinander angeordnet. Die maximale Hub-Bewegung des Schlittens 9 ist dabei durch die Steuerkurve des Steuerelements 2 bzw. durch deren Formgestaltung der Umlauffläche des Steuerelements 2 vorgebbar. Diesbezüglich erreicht der Schlitten 9 seine Endstellung im maximal nach unten bewegten Zustand dann, wenn die nockenförmige Ausbuchung des Steuerelements 2 das Abnehmerelement 3 bzw. das erste Zahnrad 4 einen maximalen Weg entlang der ersten Zahnstange 5 entlang der Schrägen nach unten bewegt hat. Beim Überstreichen dieser Maximalposition, indem die nockenförmige Ausbuchtung des Steuerelements 2 über das Abnehmerelement 3 hinweg bewirkt wird, erfolgt eine Rückführung des Schlittens 9 vertikal nach oben mittels der Rückstellfeder 10. Diesbezüglich wird dann auch durch das Eingreifen des ersten Zahnrads 4 in die Abtriebszahnstange 8 ein Rückführen des ersten Zahnrades 4 und der Abnehmerrolle 3 entlang der ersten Zahnstange 5 schräg nach oben durchgeführt.

Die Kraftübertragung auf den Schlitten 9 erfolgt querkraftfrei, was im gezeigten Ausführungsbeispiel bedeutet, dass Kräfte nur in der Figurenebene wirken.

Die Übersetzung ist im Ausführungsbeispiel derart gewählt, dass bei einer Bewegung des ersten Zahnrads 4 bzw. der Abnehmerrolle 3 entlang der ersten Zahnstange 5 um eine Längeneinheit, bspw. 1 mm, der Schlitten 9 um 1,41 Längeneinheiten, bspw. 1,41 mm, nach unten bewegt wird. Die Übersetzung ist dabei von der Position der Abnehmerrolle 3 abhängig und durch die Position der Abnehmerrolle 3 wählbar.

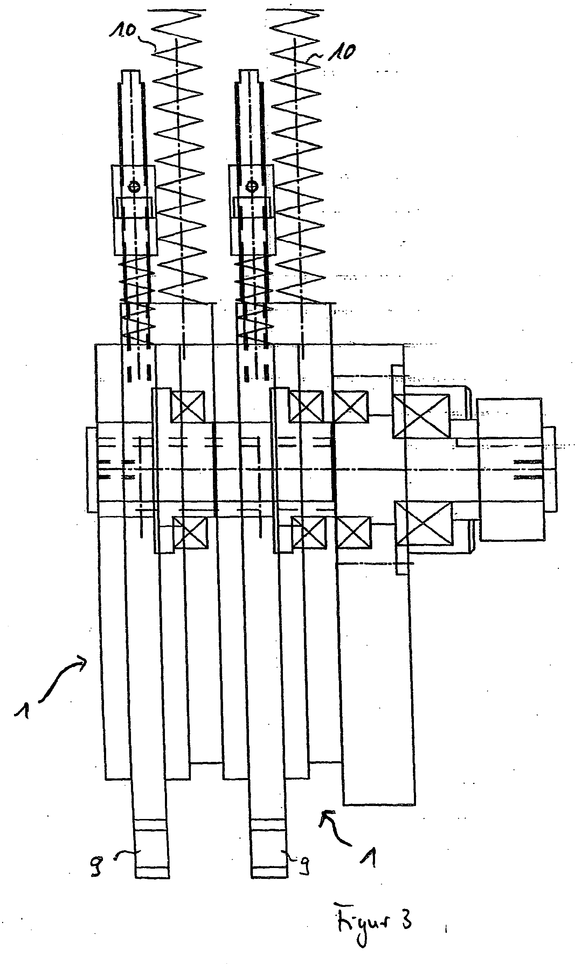

Eine weitere Querschnittdarstellung ist in Figur 3 gezeigt. Dort sind zwei erfindungsgemäße Antriebsvorrichtungen 1 übereinander bzw. nebeneinander angeordnet. Eine derartige Anordnung von mehreren Antriebsvorrichtungen 1 und diesbezüglich mehreren Schlitten 9 kann aufgrund des erfindungsgemäßen Ausbildens der Antriebsvorrichtung ermöglicht werden. Diesbezüglich tritt nämlich bei allen Antriebsvorrichtungen 1 eine Kraftübertragung querkraftfrei auf, wodurch keine Beeinträchtigung von benachbarten Antriebsvorrichtungen erfolgt.

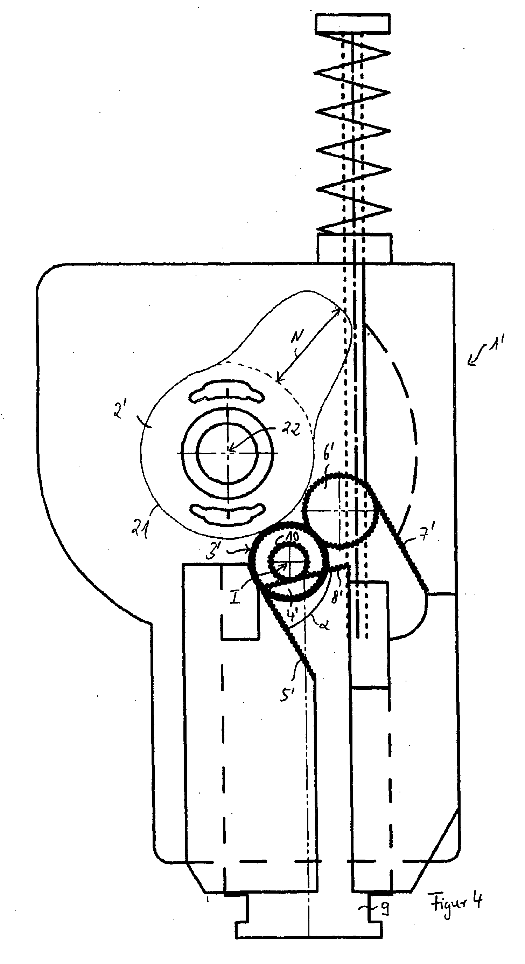

Dadurch, dass die auftretenden Kräfte in der Kurvenebene liegen, können mehrere Antriebsvorrichtungen 1 gemäß der Darstellung in Figur 4 übereinander bzw. nebeneinander angeordnet werden. Die in Figur 4 gezeigten Baugruppen können dabei unabhängig voneinander arbeiten. Der Abstand der erfindungsgemäßen Antriebsvorrichtungen gemäß der Darstellung in Figur 3 kann dabei in variabler Weise festgelegt werden.

In dem die Abnehmerrolle 3 mit einem Zahnradpaar 4 fest mechanisch verbunden ist, kann die Abnehmerrolle 3 bzw. das Zahnradpaar 4 auf der Führungs-Zahnstange 5 abrollen, wobei das Zahnradpaar 4 von entsprechenden Stützrädern 6 abgestützt wird. Die im Winkel von 90° dazu angeordnete Abtriebszahnstange 8 wird hierdurch querkraftfrei angetrieben.

In Figur 4 ist eine Querschnittdarstellung einer weiteren Ausführung der Antriebsvorrichtung 1 gezeigt. Auch in dieser Ausführung weist die Antriebsvorrichtung 1' ein Steuerelement 2' auf, welches eine nockenförmige Ausbuchtung aufweist. Die nockenförmige Ausbuchtung weist eine Nockenhöhe N auf. Diese Nockenhöhe N ist dabei diejenige Länge, welche die Ausdehnung der nockenartigen Ausbuchtung ausgehend vom Radius des Steuerelements 2' bis hin zum Rand der nockenartigen Ausbuchtung angibt. Die Ausgestaltung des Steuerelements 2' ist analog zum Steuerelement 2. Das Steuerelement 2' liegt mit seiner im Querschnitt gezeigten Umlauffläche 21 an einer nicht gezeigten Umlauffläche 31 des Abnehmelements 3' an.

Das Steuerelement 2' rotiert um die vertikal zur Figurenebene angeordnete Rotationsachse 22.

In dem in Figur 4 gezeigten Ausführungsbeispiel ist ein erstes Zahnrad 4' mit dem Abnehmerelement 3' fest verbunden. Darüber hinaus ist ein zweites Zahnrad 10 angeordnet, welches mit dem ersten Zahnrad 4' und dem Abnehmerelement 3' fest verbunden ist. Im Ausführungsbeispiel ist das zweite Zahnrad 10 zwischen dem Abnehmerelement 3' und dem ersten Zahnrad 4' angeordnet. Das Abnehmerelement 3', das erste Zahnrad 4' und das zweite Zahnrad 10 sind derart zueinander positioniert, dass sie eine gemeinsame Drehachse I aufweisen. Diese Drehachse I erstreckt sich ebenfalls senkrecht zur Figurenebene.

Wie aus der Darstellung in Figur 4 zu erkennen ist, greift das erste Zahnrad 4' mit seinen Zähnen in Zähne der ersten Zahnstange 5' ein. Das zweite Zahnrad 10 greift mit seinen Zähnen in Zähne der Abtriebszahnstange 8' ein.

In Figur 4 sind in der gezeigten Querschnittdarstellung alle wesentlichen Elemente im Hinblick auf deren Anordnung und für die Erläuterung der Antriebsvorrichtung 1' eingezeichnet. Es ist jedoch zu erwähnen, dass die erste Zahnstange 5' und die Abtriebszahnstange 8' sowie die beiden Zahnräder 4' und 10 sowie das Abnehmerelement 3' in Richtung senkrecht zur Figurenebene derart angeordnet sind, dass durch die Drehbewegung des Steuerelements 2 ein Bewegen der oben genannten Elemente derart erfolgen kann, dass eine querkraftfreie Kraftübertragung auf den Schlitten 9 ermöglicht werden kann und damit der Schlitten 9 im Wesentlichen vertikal in der Figurenebene nach unten bewegt werden kann.

Wie aus dem in Figur 4 gezeigten Ausführungsbeispiel zu erkennen ist, weist das erste Zahnrad 4' einen größeren Durchmesser als das zweite Zahnrad 10 auf. Darüber hinaüs ist zu erkennen, dass der Winkler α zwischen der ersten Zahnstange 5' und der Abtriebszahnstange 8' kleiner als 90° ist.

Im Ausführungsbeispiel kann die querkraftfreie Kraftübertragung durch eine geeignete Wahl des Verhältnisses der Durchmesser des ersten Zahnrads 4' zum zweiten Zahnrad 10 und durch die Anordnung der ersten Zahnstange 5' zur Abtriebszahnstange 8', insbesondere durch den Winkel α, erreicht werden. Die querkraftfreie Kraftübertragung kann somit in flexibler und variabler Weise dadurch erreicht und eingestellt werden, dass die Parameter des Durchmesserverhältnisses und des Winkels α entsprechend eingestellt werden.

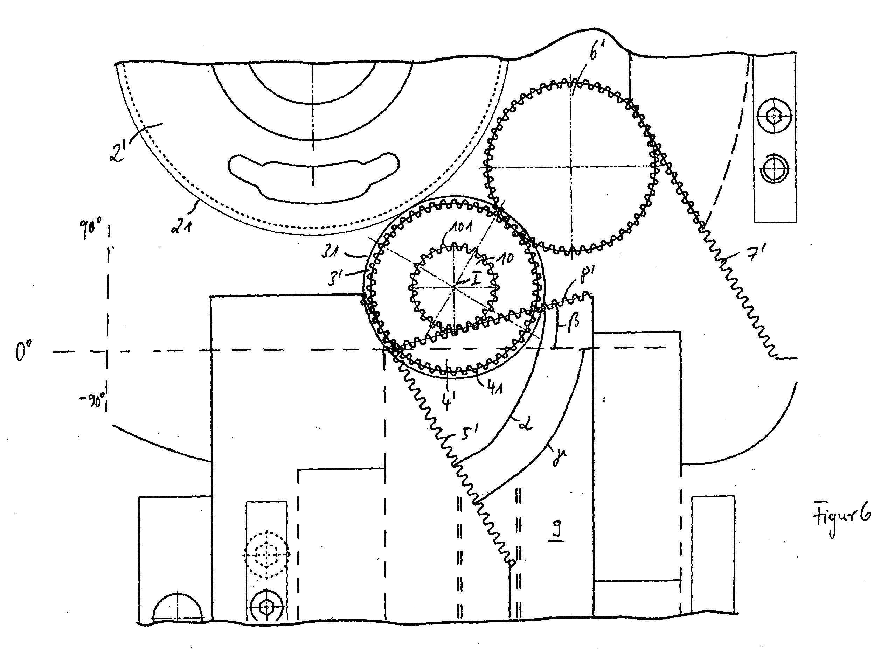

In Figur 5 ist eine Querschnittdarstellung gezeigt, in der die Anordnung des Abnehmerelements 3', von ersten Zahnrädern 4' und zweiten Zahnräder 10' verdeutlicht ist. Wie dabei zu erkennen ist, sind in dem Ausführungsbeispiel an gegenüberliegenden Seiten des Abnehmerelements 3', welches zentral positioniert ist, jeweils ein zweites Zahnrad 10 axial angeordnet. Anschließend an jedes dieser zweiten Zahnräder 10 ist jeweils ein erstes Zahnrad 4' axial (Rotationsachse I) angeordnet. Dies bedeutet, dass im Ausführungsbeispiel auch zwei erste Zahnstangen 5' derart angeordnet sind, dass jeweils eines der ersten Zahnräder 4' in eines dieser ersten Zahnstangen 5' eingreift. Darüber hinaus sind auch zwei Abtriebszahnstangen 8' derart positioniert, dass jeweils eines der zweiten Zahnräder 10 in eine dieser Abtriebszahnstangen 8' eingreift. Die ersten Zahnstangen 5' und die Abtriebszahnstangen 8' sind in Richtung senkrecht zur Figurenebene der Figur 4 derart positioniert, dass sie praktisch aneinander vorgeführt werden können.

Aus der Darstellung in Figur 5 ist des Weiteren zu erkennen, dass das bzw. die ersten Zahnräder 4' einen größeren Durchmesser d2 als das bzw. die zweiten Zahnräder 10 (Durchmesser d3) aufweisen. Darüber hinaus ist zu erkennen, dass im gezeigten Ausführungsbeispiel der Durchmesser d1 des Abnehmerelements 3' größer ist als der Durchmesser d2 der ersten Zahnräder 4'.

Darüber hinaus sind in Figur 5 die Umlauffläche 31 des Abnehmerelements 3, welche in Kontakt mit der Umlauffläche 21 des Steuerelements 2' ist, sowie die Zähne 41 bzw. 101 der ersten Zahnräder 4' bzw. 10 gezeigt, welche in die entsprechenden Zahnstangen 5' bzw. 8' eingreifen.

In Figur 6 ist ein Teilausschnitt aus der Figur 4 gezeigt. Wie aus der Darstellung in Figur 6 zu erkennen ist, ist die Abtriebszahnstange 8' um einen Winkel β gegenüber der Horizontalen in positiver Richtung geneigt. Im Nachfolgenden wird im Hinblick auf die Erläuterungen der Zahnstangen 5' und 8' sowie der Zahnräder 4' und 10 jeweils in Einzahl eine Erläuterung dargelegt. Selbstverständlich gelten diese Ausführungen auch für jeweils eine Mehrzahl dieser Elemente und deren Ausgestaltung.

Darüber hinaus ist die erste Zahnstange 5' um einen Winkel γ gegenüber der Horizontalen (0°) in negativer Winkelrichtung geneigt. Der Winkel α ist die Summe der Winkel β und γ.

Nachfolgend ist noch eine Tabelle angefügt, in welcher eine Mehrzahl an Beispielen für eine querkraftfreie Kraftübertragung auf dem mit dem Abnehmerelement 3' gekoppelten Schlitten ermöglicht werden kann.

| | | | | |
|---|---|---|---|---|
| Winkel γ | -45° | -30° | -61,04° | -26,1° |
| Übersetzung | 1,41 | 1,0 | 1,0 | 2,0 |
| Winkel β | +45° | +30° | +14,48° | +60,07° |
| Verhältnis Z2/Z1 | 1,0 | 1,0 | 0,5 | 0,9 |

Mit Z1 ist dabei die Anzahl der Zähne eines ersten Zahnrads 4 bzw. 4' gekennzeichnet. In analoger Weise ist mit der Bezeichnung Z2 die Anzahl der Zähne des zweiten Zahnrads 10 bezeichnet. Analog zu diesem Anzahlverhältnis der Zähne Z2 zu Z1 ist auch das Durchmesserverhältnis d3 zu d2. Das Durchmesserverhältnis entspricht somit im Ausführungsbeispiel äquivalent dem Anzahlverhältnis der Zähne der Zahnräder 4' und 10. Wie aus der Tabelle zu erkennen ist, kann durch eine vielfältige und variable Anordnung der ersten Zahnstange 5' und der Abtriebszahnstange 8' durch ihre jeweiligen Winkel im Verhältnis zur Horizontalen, und durch das Verhältnis Z2 zu Z1 in vielfältiger Weise die querkraftfreie Kraftübertragung erreicht werden.

In den gezeigten Ausführungsbeispielen sind die Verhältnisse Z2 zu Z1 kleiner oder gleich dem Wert 1,0 angegeben. Es kann jedoch auch vorgesehen sein, dass dieses Verhältnis Z2 zu Z1 größer dem Wert 1,0 ist. Ebenso kann ein Übersetzungswert erreicht werden, welcher kleiner dem Wert 1,0 ist. Dadurch wird eine Untersetzung erzeugt, bei der dann das Verhältnis aus Nockenhöhe N zu dem Hub des Schlittens 9 (vertikale Bewegung des Schlittens 9 senkrecht nach unten in der Figurenebene beispielsweise der Figur 4) kleiner als 1,0 ist.

Das erfindungsgemäße Antriebsprinzip kann bei kurven- oder exzentergesteuerten Biegeschlitten, bei Exzenterpressen und Stanzautomaten, bei Biege- und Schneidvorrichtungen sowie innerhalb eines Stanz- und Biegewerkzeuges verwendet werden.

## Patentansprüche

1. Antriebsvorrichtung, insbesondere für Press- und/oder Biegemaschinen, mit einem angetriebenen Steuerelement (2), durch dessen Oberflächenformgestaltung eine Steuerkurve vorgebbar ist, wobei das Steuerelement (2) an einem Abnehmerelement (3) derart anliegt, dass das Abnehmerelement (3) durch die Steuerkurve derart bewegbar ist, dass eine Kraftübertragung auf einen mit dem Abnehmerelement (3) mechanisch gekoppelten Schlitten (9) zum Bewegen des Schlittens (9) querkraftfrei erfolgt.

2. Antriebsvorrichtung nach Anspruch 1,
**dadurch gekennzeichnet, dass**
das Abnehmerelement (3) durch die Steuerkurve entlang einer ersten Zahnstange (5) bewegbar ist, wobei die Bewegung des Abnehmerelements (3) durch zumindest ein erstes Zahnrad (4) geführt ist, wobei das erste Zahnrad (4) in die erste Zahnstange (5) eingreift und mit dem Abnehmerelement (3) mechanisch verbunden ist.

3. Antriebsvorrichtung nach Anspruch 1 oder 2,
**dadurch gekennzeichnet, dass**
das Abnehmerelement (3) im Winkel von 45° zur Bewegung des Schlittens (9) geführt ist, insbesondere die erste Zahnstage (5) im Winkel von 45° zur Bewegungsrichtung des Schlittens (9) angeordnet ist.

4. Antriebsvorrichtung nach Anspruch 2 oder 3,
**dadurch gekennzeichnet, dass**
eine Abtriebszahnstange (8) im Winkel von 90° zur Bewegungsrichtung des Abnehmerelements (3), insbesondere zur ersten Zahnstange (5), angeordnet ist und mit dem Schlitten (9) mechanisch verbunden ist.

5. Antriebsvorrichtung nach Anspruch 2,
**dadurch gekennzeichnet, dass**
ein zweites Zahnrad (10) mit dem ersten Zahnrad (4; 4') mechanisch verbunden ist und in die Abtriebszahnstange (8; 8') eingreift, wobei die Abtriebszahnstange (8; 8') mit dem Schlitten (9) verbunden ist.

6. Antriebsvorrichtung nach Anspruch 5,
**dadurch gekennzeichnet, dass**
die querkraftfreie Kraftübertragung abhängig von einem variabel einstellbaren Winkel zwischen der ersten Zahnstange (5; 5') und der Abtriebszahnstange (8; 8') und einem variabel einstellbaren Verhältnis der Durchmesser des ersten Zahnrades (4; 4') und des zweiten Zahnrades (10) ist.

7. Antriebsvorrichtung nach Anspruch 5 oder 6,
**dadurch gekennzeichnet, dass**
der Durchmesser des ersten Zahnrades (4; 4') größer ist als der Durchmesser des zweiten Zahnrades (10).

8. Antriebsvorrichtung nach Anspruch 2,
**dadurch gekennzeichnet, dass**
zumindest ein Stützzahnrad (6) angeordnet ist, welches zur Abstützung des ersten Zahnrads (4) ausgebildet ist und in das erste Zahnrad (4) und eine zweite Zahnstange (7) eingreift, insbesondere in eine parallel zur ersten Zahnstange (5) angeordnete zweite Zahnstange (7) eingreift.

9. Antriebsvorrichtung nach einem der vorhergehenden Ansprüche,
**dadurch gekennzeihnet**, dass
die Umlauffläche (21) des Steuerelements (2) in einer Querschnittansicht eine kreisförmige Form mit zumindest einer nockenartigen Ausbuchtung aufweist.

10. Antriebsvorrichtung nach einem der vorhergehenden Ansprüche,
**dadurch gekennzeichnet, dass**
durch die durch die querkraftfreie Kraftübertragung hervorgerufene Hub-Bewegung des Schlittens (9) ein Umformen und/oder Schneiden von Gegenständen bewirkbar ist.

11. Antriebsvorrichtung nach Anspruch 5,
**dadurch gekennzeichnet, dass**
eine Übersetzung abhängig von dem Verhältnis der Durchmesser zwischen dem ersten Zahnrad (4; 4') und dem zweiten Zahnrad (10) variabel einstellbar ist.

12. Antriebsvorrichtung nach einem der vorhergehenden Ansprüche,
**dadurch gekennzeichnet,dass**
eine Übersetzung abhängig von der Anordnung der ersten Zahnstange (5; 5') zur Abtriebszahnstange (8; 8') einstellbar ist.

13. Antriebsvorrichtung nach einem der vorhergehenden Ansprüche,
**dadurch gekennzeichnet, dass**
eine Übersetzung durch die Position des Abnehmerelements (3) wählbar ist.
